Europäisches Patentamt

European Patent Office

Office européen des brevets

(11) Publication number: **0 336 970**
A1

(12) # EUROPEAN PATENT APPLICATION
published in accordance with Art. 158(3) EPC

(21) Application number: 88908353.1

(22) Date of filing: 22.09.88

Data of the international application taken as a basis:

(86) International application number:
PCT/JP88/00962

(87) International publication number:
WO89/03082 (06.04.89 89/08)

(51) Int. Cl.³: **G 06 F 3/06**

(30) Priority: 22.09.87 JP 238270/87

(43) Date of publication of application:
18.10.89 Bulletin 89/42

(84) Designated Contracting States:
DE GB IT

(71) Applicant: FANUC LTD
3580, Shibokusa Aza-Komanba Oshino-mura
Minamitsuru-gun Yamanashi 401-05(JP)

(72) Inventor: SEKI, Masaki
3-15-2-406, Takaido-nishi
Suginami-ku Tokyo 168(JP)

(72) Inventor: TAKEGAHARA, Takashi
256-2, Nishiterakata-cho
Hachioji-shi Tokyo 192-01(JP)

(72) Inventor: SATO, Shuji Fanuc Dai-3 Vira-karamatsu
3527-1, Shibokusa Oshino-mura
Minamitsuru-gun Yamanashi 401-05(JP)

(74) Representative: Billington, Lawrence Emlyn et al,
HASELTINE LAKE & CO Hazlitt House 28 Southampton
Buildings Chancery Lane
London WC2A 1AT(GB)

(54) **METHOD OF STORING DATA.**

(57) The whole recording region of a recording medium (11e) such as a memory card is divided into blocks ($BL_1$ to $BL_m$) of a minimum size that can be expanded, and each block is divided into many a number of segments ($RC_1$ to $RC_n$) of a fixed length. Control data (ERBM) that indicates defective record segments in the block and control data (FLRj (j = 1, 2, ----)) of the whole file stored in the block are stored in the head region (TRA) of each of the blocks ($BL_i$ to $BL_m$), and files are stored in the data region (DTA) other than the head region with a record as a unit. The control data (FLRj) of each file includes the record start position of file, a block number which, when the file is stored over a plurality of blocks, indicates how many blocks there are before said block, and a volume number which, when the file is stored in a plurality or recording media, indicates how many recording media there are before the one in which the block is stored.

FIG. 1

0336270

DESCRIPTION

METHOD OF STORING DATA

Technical Field

This invention relates to a method of storing data and, more particularly, to a method of storing data in a case where a storage medium capable of being enlarged or extended is used as a data storage device.

Background Art

A predetermined area of a storage medium such as a memory card (IC card) or ROM file is provided with file management information storage areas the number whereof conforms to the maximum number of files capable of being stored on the storage medium. The file management information storage areas store management information (blank file labels) indicating file names and blank areas, and file management information (file labels) for managing the storage location of each file, data length and the like. The file management information is referred to when reading a predetermined file out of the storage medium or writing a file in the storage medium anew.

In a storage medium of this kind, there are cases where a memory element such as a RAM or EEPROM is subsequently mounted on a printed circuit board to extend memory capacity or where the storage medium is enlarged to increase the memory capacity.

However, since the prior art is such that the number of files capable of being stored is predetermined, increasing the memory capacity does not enable a greater number of files to be stored but only makes it possible to increase file capacity.

Accordingly, it is arranged to enlarge the file management information storage area upon taking into account an increase in memory capacity or to modify the format of the storage medium whenever the memory capacity is enlarged. However, the efficiency at which the memory is used declines with the former method, while processing becomes more troublesome with the latter method of modifying the format.

An object of the present invention is to provide a data storage method in which, when a storage medium is to be enlarged or extended, file capacity and the number of files capable of being stored can be increased without modifying the format, and a single file can readily be created spanning another storage medium.

Disclosure of the Invention

The method of storing data according to the invention includes dividing an entire storage area of a storage medium into expandable blocks of minimum size, dividing each block into a number of record regions of fixed length, storing, in a leading area of each of the blocks, management information indicating a faulty record region in the block as well as management information of all files stored in the block, and, by using this management information, retrieving a block into which a file is to be written and storing a file in the block in record units, or retrieving a block in which a predetermined file has been written and reading out the file.

Brief Description of the Drawings

Fig. 1 is a block diagram of a system to which the present invention can be applied;

Fig. 2 is a view showing the structure of data stored in a storage medium;

Fig. 3 is a view for describing the format of data stored in an error map area;

Fig. 4 is a view for describing the format of data stored in a file label area;

Fig. 5 is a flowchart of processing for writing data; and

Fig. 6 is a flowchart of processing for reading data.

Best Mode for Carrying Out the Invention

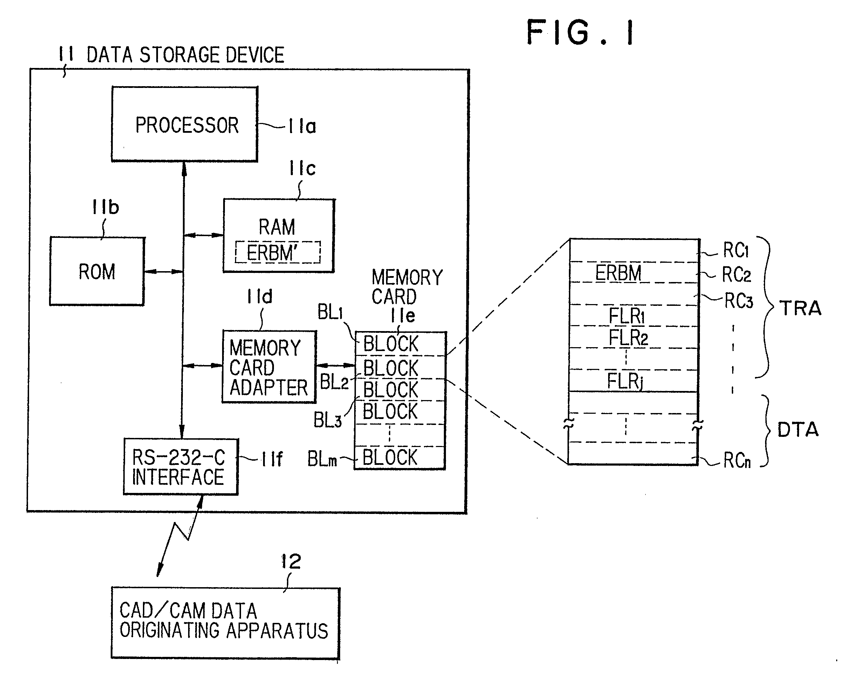

Fig. 1 is a block diagram of a system to which the present invention can be applied. Numeral 11 denotes a data storage device, and numeral 12 represents a CAD/CAM data originating apparatus. The data storage device 11 includes a processor 11a, a ROM 11b, a RAM 11c, a memory card adapter 11d, a memory card 11e and an interface 11f conforming to RS232C.

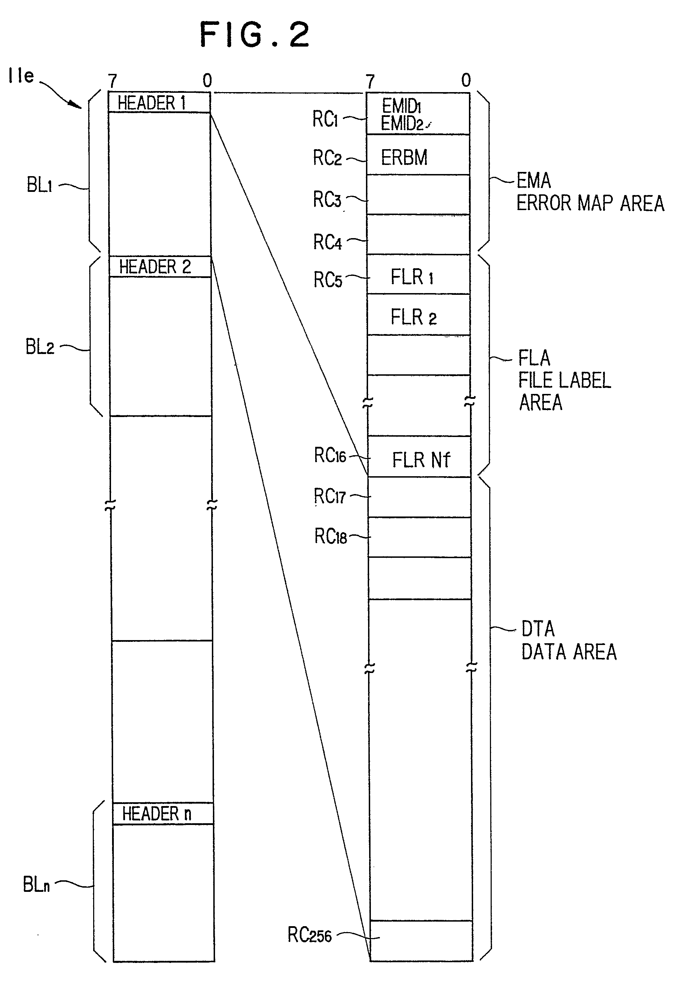

The memory card 11e is constituted by, e.g., an EEPROM or a RAM and has a structure of the kind shown in Fig. 2. Specifically, the data card 11e is divided into a plurality of expandable blocks $BL_1$, $BL_2$, ..., $BL_n$ of a minimum size (e.g., 8 kilobytes), and each block is divided into 256 records $RC_1$, $RC_2$, ... $RC_n$ (n = 256) of a fixed length (e.g., 32 bytes). The first 16 record regions $RC_1$ - $RC_{16}$ of each block are referred to collectively as a header and store management information (error map management information) indicative of faulty record regions in the block as well as management information of all files stored in the block. Data are stored in the remaining area. Specifically, the first through fourth record regions $RC_1$ - $RC_4$ define an error map area EMA, and the fifth through 16th record regions $RC_5$ - $RC_{16}$ define a file label area FLA. Record regions from a 17th record region $RC_{17}$ onward define a data area DTA.

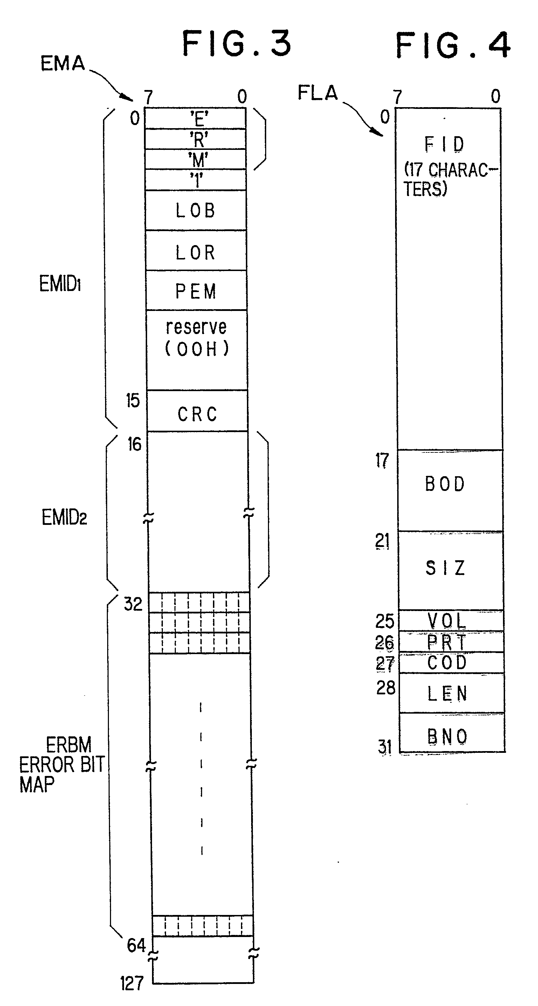

As shown in Fig. 3, the error map area EMA stores first and second error map management information $EMID_1$, $EMID_2$ each of 16 bytes, and an error bit map ERBM of 32 bytes. The remaining 64 bytes are blank.

The items of first and second error map management information $EMID_1$, $EMID_2$ are exactly the same in content and are provided in duplicate for reasons of safety. The first four bytes store identification codes ("E", "R", "M", "1") of the error map area EMA in the form of ASCII codes, the bytes that follow store the record length LOB of one block, the byte length LOR of one record, and the starting location [the value (byte) of the offset from the beginning of the block] PEM of the error bit map ERBM. The remaining bytes define a reserve area. The sum CRC of the data of the first through 14th bytes is stored in the 15th - 16th bytes. Since the data stored in each byte is expressed as an ASCII code (e.g., "E" is 44), the total value thereof is stored as the sum CRC.

The error bit map ERBM comprises 32 bytes, namely 256 bits, and the bits store the acceptability or unacceptability of respective ones of the 256 record regions $RC_1$ - $RC_{256}$ in the form of "0" or "1". In other words, if a write error occurs in the i-th record region $RC_i$, a "1" will be stored in the bit of the error bit map ERBM that corresponds to the i-th record region. A "0" is stored in a bit corresponding to a correct record region.

The file label area FLA (Fig. 2) comprises the 12 record regions $RC_5$ - $RC_{16}$, and each record region stores one item of file management information (file label). Accordingly, the arrangement is such that one block is capable of storing a maximum of 12 files. As shown in Fig. 4, a file label has the following data:

(i) a file identification (FID) expressed in the 17 characters of the ASCII code;

(ii) a file data storage starting position BOD;

(iii) if a file is stored over a plurality of blocks, a block number BNO indicating the number of that particular block;

(iv) file data length LEN within a block;

-6-

(v) if a file is stored on a plurality of storage media, a volume number VOL indicating the number of the particular storage medium;

(vi) file data length SIZ within a volume;

(vii) protection data PRT; and

(viii) a recording code COD (ISO code: SP; EIA code: E; binary code: B).

A file label (referred to as a blank label) indicating that the entirety of a data area in a block is blank is provided, and an identification code "$FO_H$" (where H indicates a hexadecimal) is written in the leading byte of this file label. Similarly, if there is an unused file label, an identification code "$FF_H$" is written in the leading byte thereof.

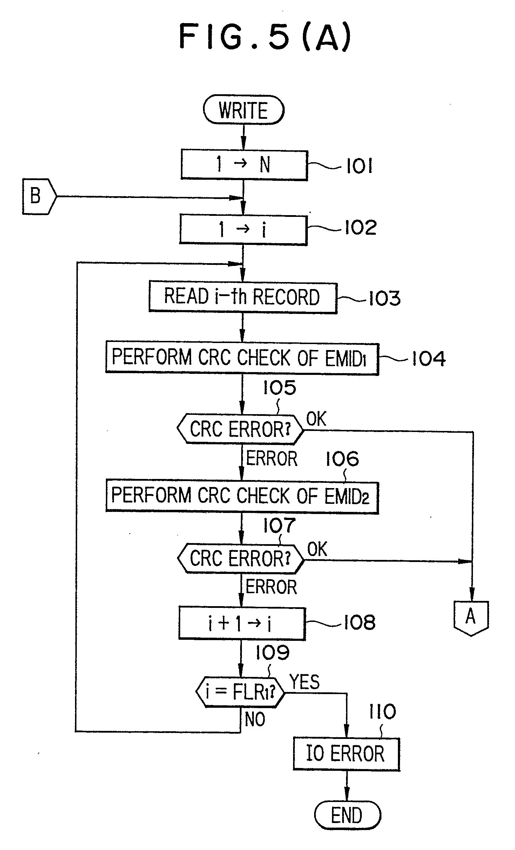

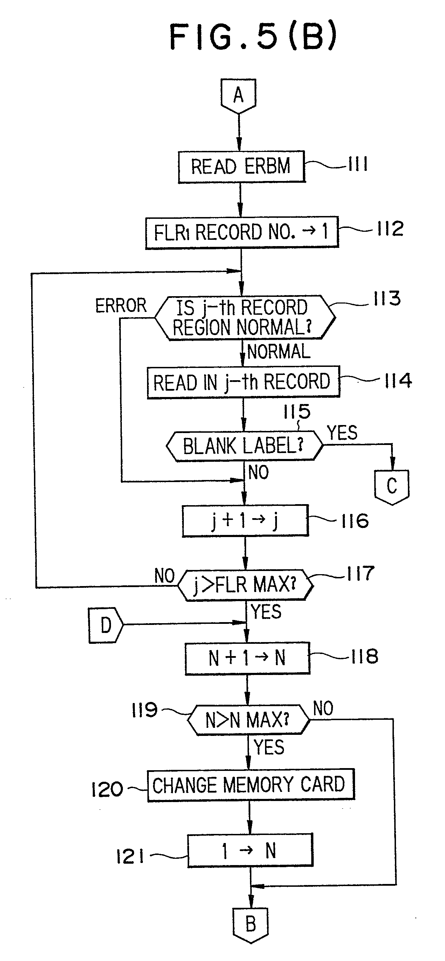

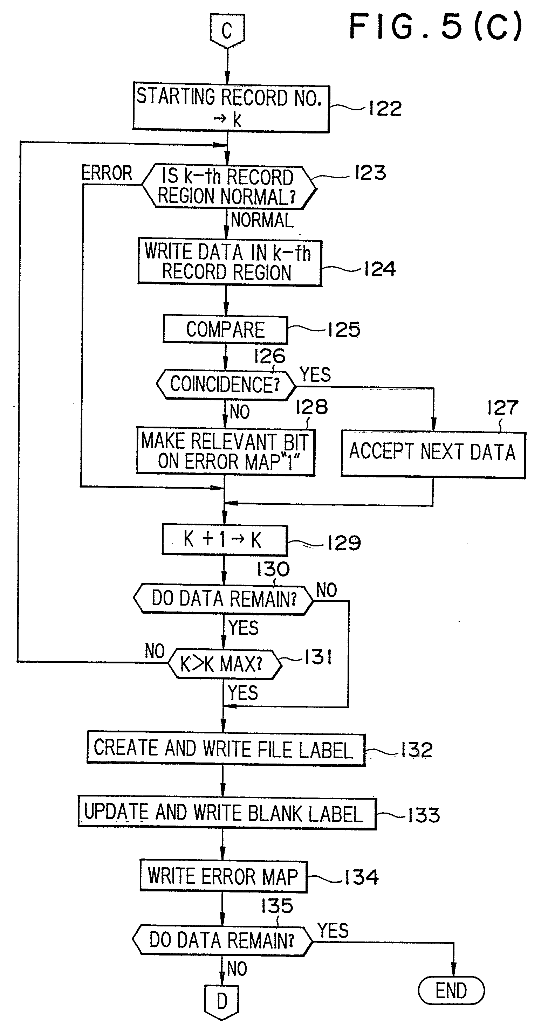

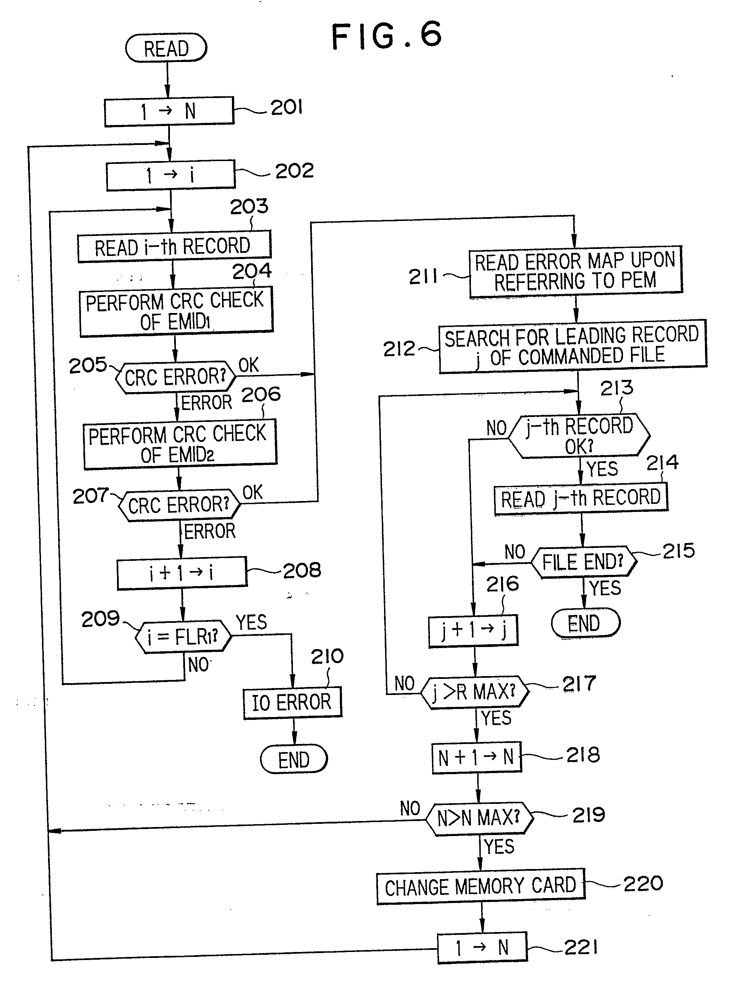

Figs. 5 and 6 are flowcharts of data write and data read processing. The method of storing data according to the present invention will now be described in accordance with these flowcharts.

(A) Data writing (see Fig. 5)

When it is desired to write data in the memory card 11e, the CAD/CAM data originating apparatus 12 transmits a write command and a file name, then transfers data following a code indicating the start of the data, and finally transfers a code indicating the end of the data. The command, file name, codes and data outputted by the CAD/CAM data originating apparatus 12 are temporarily stored in the RAM 11c via the interface 11f of the data storage device 11.

The processor 11a executes the write processing shown in Fig. 5 in accordance with a control program stored in the ROM 11b. That is, the processor performs the operations $1 \longrightarrow N$, $1 \longrightarrow i$ upon receiving the write command (steps 101, 102).

Next, the items of error map management information $EMID_1$, $EMID_2$ (see Fig. 3) of one block are read from the i-th record region $RC_i$ of the N-th block (initially the first record region $RC_1$ of the first block) of the memory card 11e (step 103), and a CRC check of the first error map management information $EMID_1$ is performed (steps 104, 105). Specifically, a check is made to determine whether the sum of the numerical values of the first through 14th bytes of $EMID_1$ agrees with the numerical value CRC stored in the 15th - 16th bytes.

If they do not agree, namely if there is a CRC error, a CRC check of the second error map management information $EMID_2$ is performed (steps 106, 107).

If a CRC error occurs also in $EMID_2$, then the operation $i + 1 \longrightarrow i$ is performed (step 108) and it is checked to see whether the i-th record region has become the record region (the fifth record region $RC_5$) of the first file label $FLR_1$. If the answer is NO, then the processing from step 103 onward is repeated; if the answer is YES, an IO error is generated and processing is terminated.

The reason for incrementing i and repeating processing from step 102 onward when a CRC error occurs is as follows: As will be understood from write processing of the error map management information $EMID_1$, $EMID_2$, described later, the CRC check is performed also when $EMID_1$, $EMID_2$ are written. When a CRC error occurs at the time of this writing operation, $EMID_1$, $EMID_2$ are written in the next record region and the CRC check is performed in similar fashion. Thereafter, this processing is repeated until $EMID_1$, $EMID_2$ are written normally or until $EMID_1$, $EMID_2$ have been written in the error map area EMA.

If a CRC error does not occur at step 105 or 107, or in other words, if the error map management information $EMID_1$ or $EMID_2$ is read out normally, then the error bit map ERBM is read out to the RAM 11c based on the error bit map storage location data PEM (see Fig. 3) contained in this management information (step 111).

Next, the record number at which the first file label $FLR_1$ is stored is made j (step 112). In the example of Fig. 2, the first file label $FLR_1$ is assumed to be stored in the fifth record region $RC_5$; therefore, the operation 5 $\longrightarrow$ j is performed.

Thereafter, whether or not the j-th record region $RC_j$ is a faulty region is checked by using an error bit map ERBM' that has been read out to the RAM 11c (step 113).

If the j-th record region is normal, then the file label is read from the j-th record region (step 114) and it is checked to see whether this label is a blank label (step 115).

If it is not a blank label, or if the j-th record region is found to be a faulty region at step 113, the operation $j + 1 \longrightarrow j$ is performed (step 116) and it is checked to see whether the j-th record region has exceeded the file label area FLA (step 117). If it has not exceeded the file label area FLA, then processing from step 113 onward is repeated; if it has, N is incremented (step 118) on the grounds that a blank label in which data can be written is not present in the N-th block. Next, it is checked to see whether N is greater than the maximum number of blocks $N_{MAX}$ of the memory card 11e (step 119). If N is smaller, the processing from step 102 onward is repeated with regard to the N-th block. It should be noted that the maximum number of blocks $N_{MAX}$ can be updated in block units (= 8 kilobyte units) when memory elements are mounted on the memory card 11e to enlarge its memory capacity.

If $N > N_{MAX}$ holds, on the other hand, the memory card is changed for another (step 120) on the grounds that a blank in which data can be written is no longer available in the mounted memory card. N is then initialized by the operation $1 \longrightarrow N$ (step 121), after which the processing from step 102 onward is repeated to write data into the new memory card.

If the file label read out of the j-th record region is found to be a blank label at step 115, the blank record starting number contained in this blank label is made k (step 122), then it is determined whether the k-th record region $RC_k$ is normal by referring to the error bit map ERBM' that has been read out to the RAM 11c (step 123).

If this record region is normal, one record of data is written in the k-th record region $RC_k$ (step 124), and this written data and the data stored in the RAM 11c are compared to see whether they coincide (steps 125, 126).

If the compared data coincide, the next item of data is read out of the RAM 11c (step 127); if they do not coincide, the bit of the k-th record region $RC_k$ in the error bit map ERBM' is made "1" to record a fault (step 128).

Thereafter, or when the k-th record region is found to be a faulty region at step 123, the operation $k + 1 \longrightarrow k$ is performed (step 129), then it is determined whether data to be written remain (step 130). If a fault is determined to exist at step 123, or if non-coincidence is found at step 126, this means that data remain.

If data remain, it is determined whether $k > k_{MAX}$ (= 256) holds. In other words, it is determined whether data have been written in the entire blank area. If $k \leq k_{MAX}$ is found to hold, processing from step 123 onward is repeated.

If there is no longer any blank space, or if there is no longer any data at step 130, a file label (see Fig. 4) is created and written in a record region of an unused label of the file label area FLA (step 132). When a file is stored extending over a plurality of blocks, the block number BNO of the file label is made "p", where the block at which the blank space is no longer available is assumed to be the p-th block. When a file is stored in a single block, the block number is made "0". When a file is stored extending over a plurality of storage media, the volume number VOL of the file label is made "q", where the storage medium containing the block at which the blank space is no longer available is assumed to be the q-th storage medium. When the filed is stored on a single storage medium, the volume number VOL is made "0".

The content of the blank label managing the blank area is then updated and written in similar fashion (step 133). It should be noted that when each file label is written in the record region at steps 132, 133, a comparison is made just as in the case of writing data. If non-coincidence is detected, the file label is written in the next record region, after which the foregoing is repeated until coincidence is achieved or until the file label area FLA is exceeded.

When file label writing ends, the error bit map ERBM' of RAM 11c is written in the record region that until now stored the error bit map and a comparison is made. In case of non-coincidence, the error bit map is written in successive record regions until coincidence is achieved. When error map writing is completed, the items of error map management information $EMID_1$, $EMID_2$ updated so as to include the error bit map write location are written in the record region that until now stored $EMID_1$, $EMID_2$, and a CRC check is performed after the writing operation. If there is a CRC error, the information is written in the next record region, after which the writing of the error map management information is performed until a CRC error no longer occurs or until the error map area EMA is exceeded (step 134). In a case where the error map area EMA is exceeded, an alarm is outputted indicating that the loaded memory card can no longer be used.

When the writing of the error map management information $EMID_1$, $EMID_2$ ends, a check is made to determine if any data remain (step 135). If there are no remaining data, the data write processing is terminated. If data remain, the processing from step 118 onward is repeated.

The foregoing relates to the writing of data. Processing for reading data will now be described.

(B)  Data reading (see Fig. 6)

When it is desired to read a file out of the memory card 11e, the CAD/CAM data originating apparatus 12 outputs a read command and a file name and stores the same in the RAM 11c via the interface 11f. In accordance with the control program stored in the ROM 11b, the processor 11a performs read processing shown in Fig. 6. It should be noted that steps 201 - 210 are exactly the same as steps 101 - 110 shown in Fig. 5 and need not be described again.

If a CRC error does not occur at step 205 or 207, namely if the error map management information $EMID_1$ or $EMID_2$ is read out normally, the error bit map ERBM is read out to the RAM 11c based on the error bit map storage location data PEM (see Fig. 3) contained in the management information (step 211).

Next, file labels are read successively from normal record regions of the file label area FLA and a file label having a commanded file name and a predetermined block number BNO is retrieved. When the retrieval is made, the data recording starting position (the leading record region $RC_j$ of the file) contained in the file label is obtained (step 212). The block number BNO initially retrieved is 1, and the block numbers of files subsequently retrieved are incremented by 1 whenever the block from which the file is read changes.

When the leading record region is obtained, the error bit map is referred to in order to check whether this record region is a normal record region (step 213). If it is normal, one record of data is read out of this record region (step 214) and it is determined whether this record is the file end (step 215). If it

-14-

is the file end, read processing is terminated.

If the record is not the file end, however, or if the result of the check made at step 213 is that the j-th record region is faulty, the operation $j + 1 \longrightarrow j$ is performed.

Next, it is checked to see whether the j-th record region has exceeded the last record region $RC_{256}$ of the block (i.e., whether $j > R_{MAX} = 256$ holds) (step 217). If the last record region has not been exceeded, processing from step 213 onward is repeated.

If $j > 256$ holds, on the other hand, the block is incremented by the operation $N + 1 \longrightarrow N$ (step 218) and it is checked to determine whether N has exceeded the maximum block $N_{MAX}$ of the memory card (step 219). If it has not been exceeded ($N \leq N_{MAX}$), the processing from step 202 onward is repeated with regard to the N-th block. If it has been exceeded ($N > N_{MAX}$), the memory card is exchanged for another, the operation 1 $\longrightarrow N$ is performed (steps 220, 221) and processing from step 201 onward is repeated.

Thus, in accordance with the present invention, the arrangement is such that a file label including a block number BNO and a volume number VOL is created whenever a blank space in a block is no longer available or whenever the writing of all data is completed at the time of a writing operation, and the file label is written in a predetermined record region at the head of the block. In other words, it is so

0336970.

arranged that file management information is stored for each and every block.  As a result, file capacity and the number of files can be increased without modifying the format even when the storage medium is expanded block by block or the storage medium is enlarged.  Moreover, one file can readily be created spanning a separate storage medium.

In accordance with the present invention, a storage medium which already has data written thereon can be enlarged.  This makes it possible to generate a required file by combining enlarged storage media.

CLAIMS:

1.    A method of storing data, characterized by:

dividing an entire storage area of a storage medium into expandable blocks of minimum size and dividing each block into a number of record regions of fixed length;

storing, in a leading area of each of the blocks, management information indicating a faulty record region in said block as well as management information of all files stored in said block; and

storing each file, in record units, in a data storage area other than the leading area.

2.    A method of storing data according to claim 1, characterized in that in a case where a file name, a recording starting position of a file and said file are stored spanning a plurality of blocks, a block number, which indicates what the number of said block is, is included in the management information of each file, and the management information of said file is stored in the leading area of each block storing said file.

3.    A method of storing data according to claim 1, characterized by providing, for every block, a blank label indicating a blank record region in a data storage area of said block, and referring to said blank labels successively from an initial block to retrieve a record region in which a file is to be written.

4.    A method of storing data according to claim 4, characterized in that when a block in which a file has

0336970

been written becomes full of data, file management information is created and stored in a leading area, a blank label is updated and data are subsequently written in the next block.

5. A method of storing data according to claim 5, characterized in that, in response to completion of writing of a file, file management information is created and stored in a leading area of a block and the blank label is updated.

6. A method of storing data according to claim 1, characterized in that when a file is stored in a predetermined record region in record units, it is checked to determine whether said record region is a faulty record region, and if said record region is a faulty region, management information indicating the faulty record region is updated and data are stored upon retrieving a normal record region.

7. A method of storing data according to claim 6, characterized in that the management information indicating the faulty record region is provided with an error bit map indicating whether a location of the faulty record region is "1" or "0", a comparison is made whenever data are written in a predetermined record region in record units, said record region is deemed to be faulty in case of non-coincidence, an error bit map read out to a working memory is updated, said data are subsequently written in the next record region and similar processing is performed, said error bit map is written in a predetermined record region in
the leading area of a block and a comparison is made at
the end of writing of all data, and in case of
non-coincidence, the error bit map is written in
successive record regions until coincidence is
achieved.

FIG. 1

11 DATA STORAGE DEVICE

PROCESSOR ~ 11a

11c

11b

RAM
ERBM'

ROM

11d

MEMORY
CARD
ADAPTER

MEMORY
CARD
11e

BL1 BLOCK
BL2 BLOCK
BLOCK
BL3 BLOCK
BLOCK
BLm BLOCK

RS-232-C
INTERFACE ~ 11f

ERBM

FLR1
FLR2

FLRj

RC1
RC2
RC3

TRA

DTA

RCn

12

CAD/CAM DATA
ORIGINATING APPARATUS

1/7

0336970

0336970

# FIG.2

FIG.3 / FIG.4

3/7

0336970

# FIG. 5 (A)

```
        ┌──────────┐
        │  WRITE   │
        └────┬─────┘
             │
        ┌────▼─────┐
        │  1 → N   │────── 101
        └────┬─────┘
             │
  ┌──┐       │
  │B │───────┤
  └──┘  ┌────▼─────┐
        │  1 → i   │────── 102
        └────┬─────┘
             │
    ┌────────┤
    │        │
    │  ┌─────▼────────────┐
    │  │ READ i-th RECORD │──── 103
    │  └─────┬────────────┘
    │        │
    │  ┌─────▼──────────────────────┐
    │  │ PERFORM CRC CHECK OF EMID₁ │── 104
    │  └─────┬──────────────────────┘
    │        │              105
    │     ┌──▼──────────┐  OK
    │     │ CRC ERROR?  ├──────────────┐
    │     └──┬──────────┘              │
    │        │ ERROR        106        │
    │  ┌─────▼──────────────────────┐  │
    │  │ PERFORM CRC CHECK OF EMID₂ │  │
    │  └─────┬──────────────────────┘  │
    │        │              107        │
    │     ┌──▼──────────┐  OK          │
    │     │ CRC ERROR?  ├──────────────┤
    │     └──┬──────────┘              │
    │        │ ERROR                 ┌─▼─┐
    │  ┌─────▼────────┐              │ A │
    │  │  i + 1 → i   │──── 108      └───┘
    │  └─────┬────────┘
    │        │  109
    │     ┌──▼──────────┐  YES
    │     │ i = FLR₁?   ├────────┐
    │     └──┬──────────┘        │  110
    └────────┤ NO                │
             │              ┌────▼─────┐
             │              │ IO ERROR │
             │              └────┬─────┘
             │                   │
             │              ┌────▼─────┐
             │              │   END    │
             │              └──────────┘
```

# FIG.5(B)

```
                    ┌───┐
                    │ A │
                    └─┬─┘
                      ▼
          ┌───────────────────┐
          │    READ ERBM      │───── 111
          └─────────┬─────────┘
                    ▼
        ┌───────────────────────┐
        │ FLR1 RECORD NO. → 1   │───── 112
        └───────────┬───────────┘
                    │
    ┌───────────────┤
    │               ▼
    │  ERROR  ╱───────────────╲
    │◄────────   IS j-th RECORD  ───── 113
    │         ╲ REGION NORMAL? ╱
    │          ╲──────┬───────╱
    │                 │ NORMAL
    │                 ▼
    │      ┌─────────────────────┐
    │      │ READ IN j-th RECORD │───── 114
    │      └──────────┬──────────┘
    │                 │      115
    │                 ▼    ╱
    │          ╱──────────────╲   YES    ┌───┐
    │          ╲ BLANK LABEL? ╱────────► │ C │
    │           ╲─────┬──────╱           └───┘
    │◄────────────────┤ NO
    │                 ▼
    │         ┌───────────────┐
    │         │   j + 1 → j   │───── 116
    │         └───────┬───────┘
    │                 ▼
    │   NO   ╱─────────────────╲
    └────────  j > FLR MAX?     ───── 117
             ╲─────────┬───────╱
                       │ YES
         ┌───┐         │
         │ D │─────────┤
         └───┘         ▼
             ┌─────────────────┐
             │   N + 1 → N     │───── 118
             └────────┬────────┘
                      ▼
    119  ╱─────────────────╲   NO
    ─────   N > N MAX?       ──────────┐
         ╲────────┬────────╱           │
                  │ YES                │
                  ▼                    │
      ┌─────────────────────────┐      │
120 ──│   CHANGE MEMORY CARD    │      │
      └────────────┬────────────┘      │
                   ▼                   │
          ┌─────────────────┐          │
121 ──────│     1 → N       │          │
          └────────┬────────┘          │
                   │◄──────────────────┘
                   ▼
                 ┌───┐
                 │ B │
                 └───┘
```

0336970

# FIG.5(C)

```
              (C)
               │
               ▼
┌─────────────────────────┐
│ STARTING RECORD NO.      │──── 122
│        → k               │
└─────────────────────────┘
               │
               ▼
   ERROR  ╱ IS k-th RECORD ╲──── 123
  ◄───────╲ REGION NORMAL? ╱
               │ NORMAL
               ▼
┌─────────────────────────┐
│ WRITE DATA IN k-th       │──── 124
│ RECORD REGION            │
└─────────────────────────┘
               │
               ▼
     ┌──────────────┐
     │   COMPARE    │──── 125
     └──────────────┘
               │      126
               ▼
      ╱ COINCIDENCE? ╲── YES ──────────┐
      ╲              ╱                  │
          │ NO    128                   ▼    127
          ▼                   ┌──────────────────┐
┌──────────────────┐          │ ACCEPT NEXT DATA │
│ MAKE RELEVANT BIT│          └──────────────────┘
│ ON ERROR MAP "1" │                   │
└──────────────────┘                   │
          │◄───────────────────────────┘
          ▼
     ┌──────────────┐
     │  K + 1 → K   │──── 129
     └──────────────┘
               │   130
               ▼
    ╱ DO DATA REMAIN? ╲── NO ──┐
    ╲                 ╱        │
          │ YES                │
          ▼                    │
  NO ╱ K > K MAX? ╲──── 131    │
 ◄───╲            ╱            │
          │ YES                │
          ▼◄───────────────────┘
┌─────────────────────────────┐
│ CREATE AND WRITE FILE LABEL │──── 132
└─────────────────────────────┘
               │
               ▼
┌──────────────────────────────┐
│ UPDATE AND WRITE BLANK LABEL │──── 133
└──────────────────────────────┘
               │
               ▼
   ┌──────────────────┐
   │ WRITE ERROR MAP  │──── 134
   └──────────────────┘
               │   135
               ▼
    ╱ DO DATA REMAIN? ╲── YES ──┐
    ╲                 ╱         │
          │ NO                  │
          ▼                     ▼
         (D)                  (END)
```

0336970

# FIG.6

READ

1 → N ——— 201

1 → i ——— 202

203

READ i-th RECORD

204

PERFORM CRC CHECK OF EMID₁

205 CRC ERROR? —OK→

ERROR 206

PERFORM CRC CHECK OF EMID₂

207 CRC ERROR? —OK→

ERROR

i + 1 → i ——— 208

209 i = FLR₁? —YES→

NO 210

IO ERROR

END

READ ERROR MAP UPON REFERRING TO PEM ——— 211

SEARCH FOR LEADING RECORD j OF COMMANDED FILE ——— 212

213

NO— j-th RECORD OK?

YES 214

READ j-th RECORD

NO— FILE END? ——— 215

216 YES

j + 1 → j    END

NO— j >R MAX? ——— 217

YES

N + 1 → N ——— 218

NO— N>N MAX? ——— 219

YES

CHANGE MEMORY CARD ——— 220

1 → N ——— 221

# INTERNATIONAL SEARCH REPORT

0336970

International Application No  PCT/JP88/00962

## I. CLASSIFICATION OF SUBJECT MATTER (if several classification symbols apply, indicate all) ⁶

According to International Patent Classification (IPC) or to both National Classification and IPC

Int.Cl⁴    G06F3/06

## II. FIELDS SEARCHED

Minimum Documentation Searched ⁷

| Classification System | Classification Symbols |
|---|---|
| IPC | G06F3/06 |

Documentation Searched other than Minimum Documentation
to the Extent that such Documents are Included in the Fields Searched ⁸

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 62-6321 (Canon Inc.)<br>13 January 1987 (13. 01. 87)<br>(Family: none) | 1 |
| Y | JP, A, 53-93732 (International Business Machines Corporation)<br>17 August 1978 (17. 08. 78)<br>& DE, A, 2,801,981 & NL, A, 7,800,768<br>& FR, A, 2,378,315 & BR, A, 7,800,454<br>& AU, A, 3,083,977 & US, A, 4,189,781<br>& GB, A, 1,592,836 & CA, A, 1,111,142<br>& CH, A, 629,901 | 1-7 |
| Y | JP, A, 62-99841 (Mitsubishi Electric Corporation)<br>9 May 1987 (09. 05. 87)<br>(Family: none) | 2 |
| Y | JP, A, 61-221842 (Sharp Corporation)<br>2 October 1986 (02. 10. 86)<br>(Family: none) | 2 |

* Special categories of cited documents: ¹⁰

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| October 6, 1988 (06. 10. 88) | October 24, 1988 (24. 10. 88) |
| International Searching Authority | Signature of Authorized Officer |
| Japanese Patent Office | |

Form PCT/ISA/210 (second sheet) (January 1985)

| FURTHER INFORMATION CONTINUED FROM THE SECOND SHEET | |
|---|---|
| Y    JP, A, 62-58479 (Hitachi, Ltd.) 14 March 1987 (14. 03. 87) (Family: none) | 2-5 |
| Y    JP, A, 61-118828 (Mitsubishi Electric Corporation) 6 June 1986 (06. 06. 86) (Family: none) | 2-5 |
| Y    JP, A, 58-114150 (Pana-Facom Kabushiki Kaisha) 7 July 1983 (07. 07. 83) (Family: none) | 3, 7 |
| Y    JP, A, 62-49532 (Toshiba Corp.) 4 March 1987 (04. 03. 87) (Family: none) | 6, 7 |

**V.☐ OBSERVATIONS WHERE CERTAIN CLAIMS WERE FOUND UNSEARCHABLE¹⁰**

This international search report has not been established in respect of certain claims under Article 17(2) (a) for the following reasons:

1.☐ Claim numbers_____ because they relate to subject matter ¹² not required to be searched by this Authority, namely:

2.☐ Claim numbers_____ because they relate to parts of the international application that do not comply with the prescribed requirements to such an extent that no meaningful international search can be carried out ¹³, specifically:

**VI.☐ OBSERVATIONS WHERE UNITY OF INVENTION IS LACKING¹¹**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)